# EUROPÄISCHE PATENTSCHRIFT

(11) **EP 1 298 314 B1**
(45) Veröffentlichungstag und Bekanntmachung des Hinweises auf die Patenterteilung: **26.11.2008**
(21) Anmeldenummer: 02021546.3
(22) Anmeldetag: 26.09.2002
(51) Int. Cl.: F02M 55/02, F16L 55/11

(54) **Kraftstoffspeicher für eine Einspritzvorrichtung**
Fuel accumulator for an injection system
Accumulateur de combustible pour un dispositif d'injection

(30) Priorität: 28.09.2001 DE 10148009
(43) Veröffentlichungstag der Anmeldung: 02.04.2003
(73) Patentinhaber: Continental Automotive GmbH, 30165 Hannover (DE)
(72) Erfinder: Taudt, Christian, 93059 Regensburg (DE); Wirkowski, Michael, 93055 Regensburg (DE)

(56) Entgegenhaltungen:
- EP-A- 0 781 700
- EP-A- 0 866 221
- EP-A- 0 886 066
- DE-A- 3 406 948

## Beschreibung

Die vorliegende Erfindung betrifft einen Kraftstoffspeicher für eine Einspritzvorrichtung einer Brennkraftmaschine mit einem Speichergehäuse, einem durch eine Aussparung gebildeten Speicherraum zum Speichern von Kraftstoff unter hohem Druck und einem Verschlusselement zum Verschließen des Speicherraums.

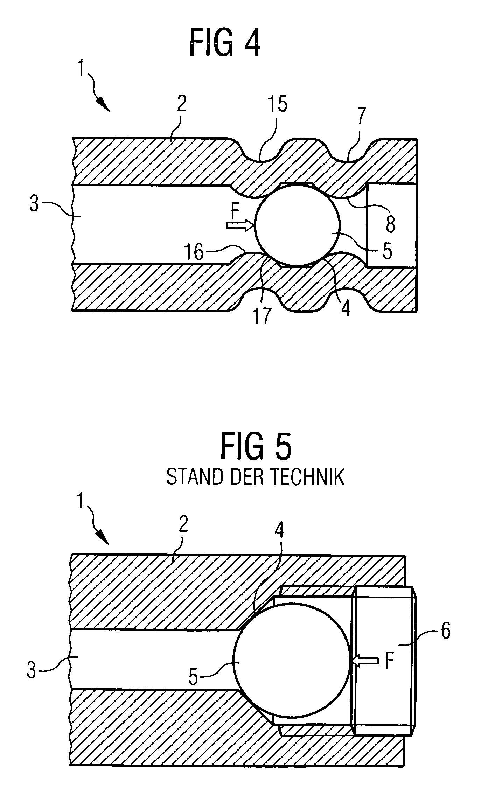

Kraftstoffspeicher werden beispielsweise bei Speichereinspritzsystemen verwendet, um einen unter hohem Druck stehenden Kraftstoff zur Verfügung zu stellen, so dass der Druck während des Einspritzvorgangs annähernd konstant bleibt. Dabei sind von dem Kraftstoffspeicher Druckanforderungen von über 1500 bar zu erfüllen. In Figur 5 ist ein bekannter Kraftstoffspeicher 1 dargestellt. Der Kraftstoffspeicher besteht aus einem im Wesentlichen rohrförmigen Speichergehäuse 2, in welchem eine Aussparung in Längsrichtung eingebracht ist, die den Speicherraum 3 bereitstellt. Am Ende des Speichergehäuses ist eine nach aussen gerichtete konische Dichtfläche 4 vorgesehen, an welcher der Kraftstoffspeicher mittels eines durch eine Kugel 5 und eine Madenschraube 6 gebildeten Endverschlusses abgedichtet ist. Durch die Kraft der Schraube 6 wird die Kugel 5 gegen die Dichtfläche 4 des Speichergehäuses gedrückt, wobei das Gewinde die Kraft aufnehmen muss. Bei in Zukunft möglichen höheren Drücken muss daher die Dimensionierung der Verschraubung vergrößert werden, damit die entsprechenden Kräfte F zum Abdichten des Kraftstoffspeichers an seinen beiden Enden aufgebracht werden können. Hierzu müsste jedoch der Aussendurchmesser des Kraftstoffspeichers vergrößert werden, um ein größer dimensioniertes Gewinde aufzunehmen.

Aus der DE-197 29 392 C2 ist weiterhin eine Abdichtung für einen Kraftstoffspeicher bekannt, welche durch eine Abschlussplatte erreicht wird. Die Abschlussplatte ist dabei zur Abdichtung des Kraftstoffspeichers an das Speichergehäuse geschweißt. Dieser Endverschluss des Kraftstoffspeichers ist jedoch relativ aufwendig herzustellen.

Die EP 0 866 221 offenbart eine Einspritzeinrichtung für einen Dieselmotor mit einem Kraftstoffverteiler, der einen Druckspeicher zur Aufnahme von statisch komprimiertem, unter sehr hohem Druck stehenden Kraftstoff aufweist, wobei in den Druckspeicher Druckleitungen münden, die an mit dem Kraftstoffverteiler verbundenen Anschlussnippeln angeschlossen sind, die so gestaltet ist, dass der Kraftstoffverteiler aus einem gezogenen oder gewalzten Rohr besteht, an das die Anschlussnippel angeschweißt oder -gelötet sind.

Es ist daher Aufgabe der vorliegenden Erfindung, einen Kraftstoffspeicher für eine Einspritzvorrichtung bereitzustellen, welcher bei einfachem Aufbau und einfacher, kostengünstiger Herstellbarkeit eine zuverlässige Abdichtung der Endbereiche des Kraftstoffspeichers ermöglicht.

Diese Aufgabe wird durch einen Kraftstoffspeicher mit den Merkmalen des Patentanspruchs 1 gelöst. Vorteilhafte Weiterbildungen sind aus den Unteransprüchen entnehmbar.

Der erfindungsgemäße Kraftstoffspeicher ist derart ausgebildet, dass eine Abdichtung eines Verschlusselements an einer Dichtfläche des Kraftstoffspeichers mittels des im Speicherraum herrschenden Druckes erfolgt. Somit wird erfindungsgemäß die für die Abdichtung notwendige Kraft durch den im Speicherraum herrschenden Betriebsdruck erzeugt. Dieser Betriebsdruck drückt das Verschlusselement gegen die Dichtfläche und stellt somit eine Abdichtung sicher. Je höher dabei der Betriebsdruck ist, desto größer ist auch die dadurch erzeugte Dichtkraft und damit die Dichtheit. Die Dichtkraft muss somit nicht schon bei der Montage des Verschlusselements ihren maximal notwendigen Wert erreichen, sondern wird erst durch den Aufbau des Betriebsdrucks erzeugt. Somit kann die Dichtkraft nie zu klein für den im Speicherraum herrschenden Betriebsdruck sein. Weiterhin hängen die durch den Endverschluss erzeugten radialen Spannungen im Kraftstoffspeicher jeweils nur von dem aktuellen Betriebsdruck und der dadurch erzeugten Dichtkraft ab und sind nicht wie bei den herkömmlichen Endverschlüssen ständig auf dem maximalen Wert. Somit treten keine überflüssigen zusätzlichen Belastungen durch die Endverschlüsse am Kraftstoffspeicher auf. Da auch auf eine aufwendige Verschraubung des Endverschlusses verzichtet werden kann, treten keine Setzerscheinungen an den Endverschlussschrauben auf, welche zu einer Verringerung der durch die Schraube aufgebrachten Dichtkraft führen können und somit zu Undichtigkeiten im Kraftstoffspeicher führen können. Um ein Abdichten auch bei einem drucklosen Zustand des Kraftstoffspeicher, z.B. nach einem längeren Stillstand des Fahrzeugs, zu gewährleisten, ist weiter ein elastisches Element im Speicherraum angeordnet, welches das Verschlusselement in Richtung der Dichtfläche vorspannt. Dadurch wird ein ständiges Anliegen des Verschlusselements an der Dichtfläche des Kraftstoffspeichers erreicht und somit eine Abdichtung in jedem Betriebszustand des Fahrzeugs möglich. Wenn der Druck im Speicherraum aufgebaut ist, unterstützt das elastische Element die Abdichtung des Kraftstoffspeichers zusätzlich.

Bei einer einfachen Ausgestaltung der vorliegenden Erfindung ist das Verschlusselement im Speicherraum angeordnet und die Dichtfläche ist derart an dem Speichergehäuse ausgebildet, dass sie zum Inneren des Speicherraums hin gerichtet ist. Die Dichtfläche wird dabei vorzugsweise durch einen sich verjüngenden Bereich, insbesondere einen konischen Bereich, bereitgestellt. Durch die nach innen gerichtete Anordnung der Dichtfläche wird somit das sich im Inneren des Speichergehäuses befindliche Verschlusselement durch den Betriebsdruck gegen die Dichtfläche gedrückt und somit der Kraftstoffspeicher nach außen abgedichtet. Die Dichtfläche im Speichergehäuse ist dabei möglichst nahe am Endbereich des Kraftstoffspeichers angeordnet.

Vorzugsweise ist die Dichtfläche des Kraftstoffspeichers durch einen konischen Bereich oder einen eingedrückten Bereich des Speichergehäuses gebildet. Der konische Bereich kann beispielsweise durch spanende Bearbeitung an der inneren Aussparung des Speichergehäuses gebildet werden. Der eingedrückte Bereich kann beispielsweise mittels Rollen oder Bördeln des Außenumfangs des Speichergehäuses hergestellt werden. Dadurch wird der Durchmesser des Speicherraums an dieser Stelle verkleinert, so dass eine zum Speicherraum hin gerichtete Dichtfläche erzeugt wird. Die derart gefertigte Dichtfläche kann besonders kostengünstig bereitgestellt werden.

Gemäß einer anderen bevorzugten Ausgestaltung der vorliegenden Erfindung wird die Dichtfläche durch einen an der Stirnseite des Kraftstoffspeichers eingekerbten und nach innen umgebogenen Bereich gebildet. Hierzu wird in der im Wesentlichen ringförmigen Stirnendseite des Kraftstoffspeichers ein ringförmig umlaufender Schlitz eingebracht, welcher die Stirnendseite in einen äußeren und einen inneren Bereich unterteilt. Anschließend wird der innere Bereich um einen bestimmten Betrag nach innen umgebogen, so dass zwischen dem äußeren und dem inneren Endbereich eine Kerbe entsteht. Der nach innen umgebogene innere Bereich stellt dabei die Dichtfläche für den Kraftstoffspeicher bereit.

Vorzugsweise ist das Verschlusselement im Speicherraum frei beweglich angeordnet.

Besonders bevorzugt ist das elastische Element als Schraubenfeder oder als Tellerfeder oder als Gummielement ausgebildet. Dabei kann das elastische Element beispielsweise mittels einer Presspassung im Speicherraum positioniert sein oder im Speicherraum ist vorzugsweise ein Absatz ausgebildet, an welchem sich das elastische Element abstützt. Es ist weiterhin möglich, dass sich das elastische Element am anderen Ende des Speicherraumes an einem zweiten Verschlusselement abstützt und es somit an beiden Enden des Speicherraums auf beide Verschlusselemente gleichzeitig wirkt.

Vorteilhaft ist der Außendurchmesser des Speichergehäuses am äußersten Endbereich kleiner als an einem mittleren Bereich. Dadurch kann zum einen das Gewicht des Kraftstoffspeichers verringert werden und zum anderen kann bei einer Herstellung der Dichtfläche mittels Rollen oder Bördeln die Herstellung vereinfacht werden, da die zu bearbeitende Wandstärke am Endbereich des Kraftstoffspeichers kleiner ist.

Besonders bevorzugt ist das Verschlusselement als Kugel oder als Kegelstumpf ausgebildet.

Durch Nutzung des hohen Druckes des Kraftstoffes im Kraftstoffspeicher wird eine Abdichtung des Kraftstoffspeichers erreicht. Die aufzubringende Dichtkraft drückt dabei die Dichtelemente nicht gegen den Betriebsdruck in ihren Dichtsitz, sondern der Betriebsdruck selbst erzeugt die notwendige Dichtkraft. Somit kann die Dichtkraft nie zu klein für den jeweils herrschenden Betriebsdruck sein und es kann eine dynamische Abdichtung des Kraftstoffspeichers an den jeweils herrschenden Betriebsdruck erreicht werden.

Nachfolgend wird die Erfindung anhand von bevorzugten Ausführungsbeispielen in Verbindung mit der Zeichnung beschrieben. In der Zeichnung zeigt:
- Figur 1: eine schematische Schnittansicht eines Kraftstoffspeichers mit einem Endverschluss gemäß einem ersten Ausführungsbeispiel nicht nach der vorliegenden Erfindung,
- Figur 2: eine schematische Schnittansicht eines Kraftstoffspeichers mit einem Endverschluss gemäß einem zweiten Ausführungsbeispiel nicht nach der vorliegenden Erfindung,
- Figur 3: eine schematische Schnittansicht eines Kraftstoffspeichers mit einem Endverschluss gemäß einem Ausführungsbeispiel nach der vorliegenden Erfindung,
- Figur 4: eine schematische Schnittansicht eines Kraftstoffspeichers mit einem Endverschluss gemäß einem dritten Ausführungsbeispiel nicht nach der vorliegenden Erfindung und
- Figur 5: einen Kraftstoffspeicher mit einem Endverschluss gemäß dem Stand der Technik.

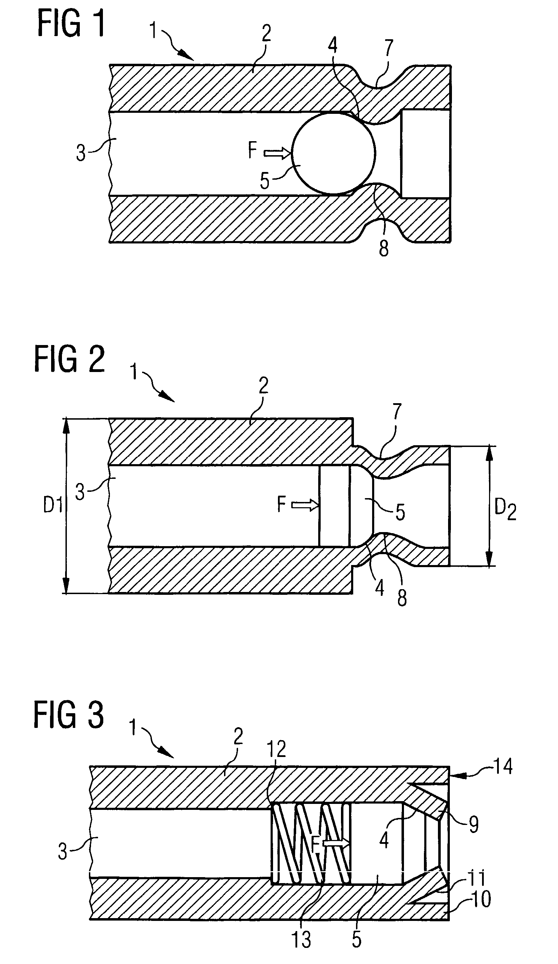

Nachfolgend wird unter Bezugnahme auf Figur 1 ein Kraftstoffspeicher mit einem Endverschluss gemäß einem ersten Ausführungsbeispiel nicht nach der vorliegenden Erfindung beschrieben.

Wie in Figur 1 gezeigt, umfasst der Kraftstoffspeicher 1 ein im Wesentlichen rohrförmiges Speichergehäuse 2, in welchem ein durch eine Längsausnehmung gebildeter Speicherraum 3 angeordnet ist. Im Speicherraum 3 wird Kraftstoff für eine Einspritzung in einen Brennraum einer Brennkraftmaschine unter hohem Druck gespeichert. Hierzu sind am Kraftstoffspeicher 1 mehrere, nicht dargestellte Querbohrungen vorgesehen, durch welche der Kraftstoff in bekannter Weise zu den jeweiligen Leitungen und zu den Einspritzvorrichtungen geführt wird.

Der Endverschluss des in Figur 1 gezeigten Kraftstoffspeichers 1 wird durch einen eingedrückten Bereich 7 am Ende des Kraftstoffspeichers und ein im Speicherraum 3 angeordnetes Verschlusselement 5 in Form einer Kugel bereitgestellt. Genauer ist der eingedrückte Bereich 7 durch Rollen des Aussenumfangs des Speichergehäuses 2 gebildet, so dass am äußeren Umfang des Gehäuses 2 eine ringförmige Vertiefung entsteht und am inneren Umfang des Speicherraums 2 ein ringförmiger vorstehender Bereich 8 entsteht. Die beiden Bereiche 7 und 8 sind dabei am gesamten Umfang des Kraftstoffspeichers gebildet. Wie aus Figur 1 ersichtlich ist, ist der innere vorstehende Bereich 8 deichförmig gebildet, so dass eine Dichtfläche 4 entsteht, welche zum Inneren des Speicherraums 3 hin gerichtet ist.

Wenn nun im Speicherraum 3 ein hoher Druck herrscht, wird das Verschlusselement 5 durch den Betriebsdruck mit einer Kraft F in Richtung auf die Dichtfläche 4 gedrückt. Dadurch entsteht eine umlaufende Dichtung zwischen dem Verschlusselement 5 und der Dichtfläche 4. Die Dichtkraft wird dabei ausschließlich durch den im Speicherraum 3 herrschenden Betriebsdruck bereitgestellt. Da die Dichtkraft von den jeweils herrschenden Druckverhältnissen im Speicherraum 3 abhängt, wird immer eine optimale Dichtkraft F bereitgestellt, bei der eine sichere und zuverlässige Abdichtung am Endbereich des Kraftstoffspeichers möglich ist.

Es sei angemerkt, dass der Endverschluss einerseits derart hergestellt werden kann, dass zuerst das Verschlusselement 5 in den Speicherraum 3 eingeführt wird und anschließend die Dichtfläche 4 ausgebildet wird, oder dass zuerst die Dichtfläche 4 im Speichergehäuse 2 ausgebildet wird und das Verschlusselement von der anderen Seite des Speichergehäuses in den Speicherraum 3 eingeführt wird. Danach kann dann ein weiteres Verschlusselement für das andere Ende des Kraftstoffspeichers 1 in den Speicherraum eingeführt werden und eine weitere Dichtfläche am anderen Ende des Kraftstoffspeichers hergestellt werden.

In Figur 2 ist ein Kraftstoffspeicher gemäß einem zweiten Ausführungsbeispiel nicht nach der vorliegenden Erfindung dargestellt. Gleiche bzw. funktional gleiche Teile sind mit den gleichen Bezugszeichen wie im ersten Ausführungsbeispiel bezeichnet.

Im Unterschied zum ersten Ausführungsbeispiel ist beim zweiten Ausführungsbeispiel der äußerste Endbereich des Speichergehäuses 2 derart ausgebildet, dass er einen Durchmesser D₂ aufweist, welcher kleiner als ein Durchmesser D₁ des mittleren Bereichs des Speichergehäuses ist. Aufgrund der geringeren Wandstärke im äußersten Endbereich des Kraftstoffspeichers 1 kann der eingedrückte Bereich 7 bzw. der vorstehende Bereich 8 z.B. mittels Rollen oder Bördeln einfacher hergestellt werden. Als Verschlusselement 5 ist beim zweiten Ausführungsbeispiel ein zylindrisches Element mit einem kegelstumpfförmigen Dichtbereich vorgesehen. Der kegelstumpfförmige Dichtbereich liegt dabei, wie in Figur 2 gezeigt, an der zum Speicherinneren gerichteten Dichtfläche 4 des Speichergehäuses 2 an. Durch den im Speicherraum 3 herrschenden Betriebsdruck wird das Verschlusselement 5 mit einer Kraft F gegen die Dichtfläche 4 gedrückt. Ansonsten entspricht das zweite Ausführungsbeispiel dem ersten Ausführungsbeispiel, so dass auf die dort gegebene Beschreibung verwiesen werden kann. In einer weiteren Ausführungsform nicht nach der Erfindung ist das zylindrische Element 5 beim Einsetzen in das Speichergehäuse 2 gegen den Dichtsitz 4 gedrückt und plastisch so verformt, dass eine dichtende Presspassung zwischen dem zylindrischen Element 5 und dem Dichtsitz 5 entsteht, wodurch das zylindrische Element 5 im Speichergehäuse axial fixiert, d.h. nicht verschiebbar ist. Dies wird beispielsweise fertigungstechnisch ähnlich der Befestigungsart verschiedener Nietarten, z.B. Königsniete realisiert.

In Figur 3 ist ein Kraftstoffspeicher mit einem Endverschluss gemäß einem Ausführungsbeispiel nach der vorliegenden Erfindung dargestellt. Gleiche bzw. funktional gleiche Teile sind dabei wieder mit den gleichen Bezugszeichen wie im ersten Ausführungsbeispiel bezeichnet.

Wie in Figur 3 gezeigt, ist die nach innen gerichtete Dichtfläche 4 des Kraftstoffspeichers 1 durch einen inneren Endbereich 9 der Stirnseite 14 bereitgestellt. Die Dichtfläche wird dabei derart bereitgestellt, dass in die ringförmige Stirnseite 14 des Speichergehäuses 2 ein ringförmiger Schlitz eingebracht wird, so dass die Stirnseite in einen inneren Endbereich 9 und einen äußeren Endbereich 10 unterteilt ist. Anschließend wird der innere Endbereich 9 nach innen umgebogen, so dass eine Kerbung 11 zwischen dem inneren Endbereich 9 und dem äußeren Endbereich 10 entsteht (vgl. Figur 3). Durch das Umbiegen des inneren Endbereichs 9 wird die zum Speicherraum 3 hin gerichtete umlaufende Dichtfläche 4 erzeugt.

Wie weiterhin in Figur 3 gezeigt, ist eine Schraubenfeder 13 vorgesehen, welche sich an einem im Speicherraum 3 gebildeten Absatz 12 abstützt. Die Schraubenfeder 13 spannt das Verschlusselement 5 in Richtung der Dichtfläche 4 ständig vor, so dass das Verschlusselement 5 unabhängig vom Druck im Speicherraum 3 ständig gegen die Dichtfläche 4 gedrückt wird. Dadurch ist eine ständige Abdichtung am Endbereich des Kraftstoffspeichers 1, d.h. auch bei einem drucklosen Zustand im Speicherraum 3, vorhanden. Somit wird das Verschlusselement 3 zusätzlich zu der durch den Speicherdruck aufgebrachten Abdichtkraft F noch durch die Vorspannkraft der Feder 13 gegen die Dichtfläche 4 gedrückt, wenn im Speicherraum 3 ein Druck vorherrscht.

In Figur 4 ist ein Kraftstoffspeicher mit einem Endverschluss gemäß einem dritten Ausführungsbeispiel nicht nach der vorliegenden Erfindung dargestellt. Gleiche bzw. funktional gleiche Teile sind wieder mit den gleichen Bezugszeichen wie in den vorhergehenden Ausführungsbeispielen bezeichnet.

Das dritte Ausführungsbeispiel entspricht im Wesentlichen dem ersten Ausführungsbeispiel, wobei im Gegensatz zum ersten Ausführungsbeispiel noch zusätzlich eine zweite Dicht- bzw. Stützfläche 17 bereitgestellt ist, um eine Abdichtung des Endverschlusses auch ohne Betriebsdruck zu erreichen. Die Stützfläche 17 wird durch einen zweiten eingedrückten Bereich 15 bzw. einen zweiten vorstehenden Bereich 16 bereitgestellt. Das Verschlusselement 5 ist dabei spielfrei zwischen der ersten Dichtfläche 4 und der Stützfläche 17 angeordnet (vgl. Figur 4).

Die Stützfläche 17 kann dabei in gleicher Weise wie die erste Dichtfläche 4 beispielsweise mittels Rollen oder Bördeln des Außenumfangs des Speichergehäuses 2 hergestellt werden. Es sei angemerkt, dass die eingedrückten Bereiche 7, 15 gleichzeitig oder auch nacheinander hergestellt werden können. Beispielsweise wird zuerst der zweite eingedrückte Bereich 15 hergestellt. Anschließend wird das Verschlusselement 5 im Speichergehäuse 2 positioniert und danach wird der erste eingedrückte Bereich 7 hergestellt, so dass das Verschlusselement 5 spielfrei zwischen den beiden Dichtflächen 4, 17 angeordnet ist. Es sei angemerkt, dass das Verschlusselement 5 beispielsweise auch mittels einer Presspassung im Speicherraum 3 positioniert werden kann und anschließend die beiden eingedrückten Bereich gleichzeitig oder nacheinander in beliebiger Reihenfolge hergestellt werden können.

Vorzugsweise wird beim dritten Ausführungsbeispiel eine Kugel als Verschlusselement 5 verwendet. Es ist jedoch auch möglich, dass andere geometrisch geformte Verschlusselemente, beispielsweise ein im Wesentlichen zylindrisches Element mit zwei einander entgegengesetzten konischen Endbereichen verwendet wird. Weiterhin ist es möglich, dass der zweite eingedrückte Bereich 15 derart angeordnet wird, dass über die Stützfläche 17 eine zusätzliche Dichtkraft in Richtung der ersten Dichtfläche 4 erzeugt wird, welche die durch den Betriebsdruck erzeugte Dichtkraft F bei der Abdichtung unterstützt.

### Bezugszeichenliste

- 1: Kraftstoffspeicher
- 2: Speichergehäuse
- 3: Speicherraum
- 4: Dichtfläche
- 5: Verschlusselement
- 6: Endverschlussschraube
- 7: eingedrückter Bereich
- 8: vorstehender Bereich
- 9: innerer Endbereich
- 10: äußerer Endbereich
- 11: Einkerbung
- 12: Absatz
- 13: Feder
- 14: Stirnseite
- 15: eingedrückter Bereich
- 16: vorstehender Bereich
- 17: Stützfläche
- F: Dichtkraft

## Patentansprüche

1. Kraftstoffspeicher für eine Einspritzvorrichtung einer Brennkraftmaschine mit einem Speichergehäuse (2), einem durch eine Aussparung gebildeten Speicherraum (3) zum Speichern von Kraftstoff unter hohem Druck und einem Verschlusselement (5) zum Verschließen des Speicherraums (3), wobei eine Abdichtung des Verschlusselements (5) an einer Dichtfläche (4) des Kraftstoffspeichers mittels des im Speicherraum (3) herrschenden Drucks erfolgt, **dadurch gekennzeichnet, dass** das Verschlusselement (5) mittels eines elastischen Elements (13) in Richtung der Dichtfläche (4) vorgespannt ist.

2. Kraftstoffspeicher nach Anspruch 1, **dadurch gekennzeichnet, dass** das Verschlusselement (5) im Speicherraum (3) angeordnet ist und die Dichtfläche (4) derart am Speichergehäuse (2) ausgebildet ist, dass die Dichtfläche (4) zum Inneren des Speicherraums (3) hin gerichtet ist.

3. Kraftstoffspeicher nach Anspruch 1 oder 2, **dadurch gekennzeichnet, dass** die Dichtfläche (4) durch einen konischen Bereich oder einen eingedrückten Bereich des Speichergehäuses (2) gebildet ist.

4. Kraftstoffspeicher nach Anspruch 1 oder 2, **dadurch gekennzeichnet, dass** die Dichtfläche (4) durch einen gekerbten und umgebogenen Bereich (9) an einer Stirnseite (14) des Speichergehäuses (2) gebildet ist.

5. Kraftstoffspeicher nach einem der vorhergehenden Ansprüche, **dadurch gekennzeichnet, dass** das Verschlusselement (5) frei beweglich im Speicherraum angeordnet ist.

6. Kraftstoffspeicher nach einem der vorhergehenden Ansprüche, **dadurch gekennzeichnet, dass** das elastische Element (13) eine Schraubenfeder oder eine Tellerfeder oder ein Gummielement ist.

7. Kraftstoffspeicher nach einem der vorhergehenden Ansprüche, **dadurch gekennzeichnet, dass** im Inneren des Speichergehäuses (2) ein Absatz (12) ausgebildet ist, an welchem sich das elastische Element (13) abstützt.

8. Kraftstoffspeicher nach einem der Ansprüche 1 bis 5, **dadurch gekennzeichnet, dass** sich das elastische Element (13) an einem am anderen Ende des Speicherraumes (3) angeordneten anderen Verschlusselement abstützt.

9. Kraftstoffspeicher nach einem der vorhergehenden Ansprüche, **dadurch gekennzeichnet, dass** ein Außendurchmesser (D₂) des Speichergehäuses (2) an einem Endbereich kleiner ist als ein Außendurchmesser (D₁) an einem mittleren Bereich des Speichergehäuses (2) ist.

10. Kraftstoffspeicher nach einem der Ansprüche 1 bis 9, **dadurch gekennzeichnet, dass** das Verschlusselement (5) als Kugel, als Zylinder oder als Kegelstumpf ausgebildet ist.

## Claims

1. Fuel accumulator for an injection device in an internal combustion engine having an accumulator housing (2), a storage space (3) formed by a recess for storing fuel at high pressure and a closure element (5) for closing the storage space (3), with a seal of the closure element (5) on a sealing surface (4) of the fuel accumulator taking place by means of the pressure prevailing in the storage space (3), **characterized in that** the closure element (5) is prestressed by means of an elastic element (13) in the direction of the sealing surface (4).

2. Fuel accumulator according to claim 1, **characterised in that** the closure element (5) is arranged in the storage space (3) and the sealing surface (4) is embodied on the accumulator housing (2) such that the sealing surface (4) is directed toward the interior of the storage space (3).

3. Fuel accumulator according to claim 1 or 2, **characterized in that** the sealing surface (4) is formed by a conical area or an indented area of the accumulator housing (2).

4. Fuel accumulator according to claim 1 or 2, **characterised in that** the sealing surface (4) is formed by a grooved and bent area (9) on a front face (14) of the accumulator housing (2).

5. Fuel accumulator according to one of the preceding claims, **characterised in that** the closure element (5) is arranged in a freely moveable fashion in the storage space.

6. Fuel accumulator according to one of the preceding claims, **characterised in that** the elastic element (13) is a helical spring or a disk spring or a rubbery element.

7. Fuel accumulator according to one of the preceding claims, **characterised in that** an appendage (12) is embodied inside the accumulator housing (2), against which the elastic element (13) rests.

8. Fuel accumulator according to one of claims 1 to 5, **characterised in that** the elastic element (13) rests against another closure element arranged at the other end of the storage space (3).

9. Fuel accumulator according to one of the preceding claims, **characterised in that** an outer diameter (D₂) of the accumulator housing (2) at one end region is smaller than an outer diameter (D₁) at a central region of the accumulator housing (2).

10. Fuel accumulator according to one of claims 1 to 9, **characterised in that** the closure element (5) is embodied as a ball, a cylinder or as a truncated cone.

## Revendications

1. Réservoir de carburant pour un dispositif d'injection d'un moteur à combustion interne, comprenant un corps de réservoir (2), une chambre de réservoir (3) formée par un évidement, destinée à accumuler du carburant sous haute pression, et un élément obturateur (5) destiné à fermer la chambre de réservoir (3), dans lequel un étanchement de l'élément obturateur (5) contre une surface d'étanchéité (4) du réservoir de carburant est assuré au moyen de la pression qui règne dans la chambre de réservoir (3), **caractérisé en ce que** l'élément obturateur (5) est précontraint en direction de la surface d'étanchéité (4) au moyen d'un élément élastique (13).

2. Réservoir de carburant selon la revendication 1, **caractérisé en ce que** l'élément obturateur (5) est disposé dans la chambre de réservoir (3), et la surface d'étanchéité (4) est conformée dans le corps de réservoir (2), de telle manière que la surface d'étanchéité (4) soit dirigée vers l'intérieur de la chambre de réservoir (3).

3. Réservoir de carburant selon la revendication 1 ou 2, **caractérisé en ce que** la surface d'étanchéité (4) est formée par une région conique ou par une région repoussée du corps de réservoir (2).

4. Réservoir de carburant selon la revendication 1 ou 2, **caractérisé en ce que** la surface d'étanchéité (4) est formée par une région entaillée et repliée (9) formée à un côté frontal (14) du corps de réservoir (2).

5. Réservoir de carburant selon une des revendications précédentes, **caractérisé en ce que** l'élément obturateur (5) est disposé librement mobile dans la chambre de réservoir.

6. Réservoir de carburant selon une des revendications précédentes, **caractérisé en ce que** l'élément élastique (13) est un ressort hélicoïdal, un ressort disque ou un élément en caoutchouc.

7. Réservoir de carburant selon une des revendications précédentes, **caractérisé en ce qu'**à l'intérieur du corps de réservoir (2), est formé un épaulement (12) contre lequel l'élément élastique (13) s'appuie

8. Réservoir de carburant selon une des revendications 1 à 5, **caractérisé en ce que** l'élément élastique (13) s'appuie contre un autre élément obturateur disposé à l'autre extrémité de la chambre de réservoir (3).

9. Réservoir de carburant selon une des revendications précédentes, **caractérisé en ce qu'**un diamètre extérieur (D₂) du corps de réservoir (2) dans une région terminale est plus petit que le diamètre extérieur (D₁) dans une région centrale du corps de réservoir (2).

10. Réservoir de carburant selon une des revendications 1 à 9, **caractérisé en ce que** l'élément obturateur (5) est constitué par une sphère, un cylindre ou un tronc de cône.
